# EUROPEAN PATENT APPLICATION

(11) **EP 4 737 699 A1**
(43) Date of publication of application: **06.05.2026**
(21) Application number: 25212694.1
(22) Date of filing: 31.10.2025
(51) Int. Cl.: F02C 7/045, F02C 7/047

(54) **ACOUSTIC STRUCTURE WITH ARRAY OF INTERCONNECTED RESONATORS, AND ANTI-ICING SYSTEM**

(30) Priority: 31.10.2024 US 202418933604
(71) Applicant: RTX Corporation, Farmington, CT 06032 (US)
(72) Inventor: WINKLER, Julian, Farmington, 06032 (US); REIMANN, Craig A., Farmington, 06032 (US); HOMMA, Kenji, Farmington, 06032 (US); MENDOZA, Jeffrey M., Farmington, 06032 (US); GOK, Gurkan, Farmington, 06032 (US); MANTESE, Joseph V., Farmington, 06032 (US)
(74) Representative: Dehns

(57) **Abstract**

A gas turbine engine (20) includes a fan (42) delivering air into a bypass duct (13) defined between a nacelle (301) and an inner core housing (15). The inner core housing (15) receives a compressor section (24), a turbine section (28) and a combustor (56). The nacelle (301) has an inner periphery (141) with a forwardmost point, and receives an acoustic structure on the inner periphery (141) adjacent the forwardmost point. The acoustic structure is defined by a three dimensional array (100) of interconnected resonators (102), with the interconnected resonators (102) extending in a radial direction (R), a circumferential direction (C) and an axial direction (A) all defined about a rotational axis (A) of the engine (20), with the interconnected resonators (102) having a larger cross-sectional area central body (104), and six members (106, 108, 110, 112, 143; 198) connecting the central body (104) of the resonators (102) to adjacent resonators (102) at respective central bodies (104). A perforated face sheet (118) is inward of the three dimensional array (100) of interconnected resonators and an anti-icing system.

## Description

### TECHNICAL FIELD

This application relates to an acoustic structure formed of a three dimensional array of interconnected resonators, and an anti-icing system.

### BACKGROUND

Gas turbine engines are known, and typically include a propulsor delivering air into a nacelle as bypass air, and into a core engine. In the core engine, a compressor compresses air and delivers compressed air into a combustor where it is mixed with fuel and ignited. Products of this combustion pass downstream over turbine rotors, driving them to rotate. The turbine rotors in turn drive the compressor and fan rotor.

There are challenges with gas turbine engines. One challenge is the suppression of sound adjacent a forward end of the nacelle. Acoustic treatments are typically provided at that location. One recently developed acoustic treatment is provided by a three dimensional array of interconnected resonators.

Another challenge with gas turbine engines is to deice the forwardmost end of the inner periphery of the nacelle. In some ways, providing acoustic treatment complicates providing anti-icing.

### SUMMARY

In an aspect of the present invention, a gas turbine engine includes a fan delivering air into a bypass duct defined between a nacelle and an inner core housing. The inner core housing receives a compressor section, a turbine section and a combustor. The nacelle has an inner periphery with a forwardmost point, and receives an acoustic structure on the inner periphery adjacent the forwardmost point. The acoustic structure is defined by a three dimensional array of interconnected resonators, with the interconnected resonators extending in a radial direction, a circumferential direction and an axial direction all defined about a rotational axis of the engine, with the interconnected resonators having a larger cross-sectional area central body, and six members connecting the central body of the resonators to adjacent resonators at respective central bodies. A perforated face sheet is inward of the three dimensional array of interconnected resonators and an anti-icing system.

In an embodiment of the above, there is an opening through the central body and at least some of the tube portions adjacent central body. There are openings formed between adjacent ones of the cells and extending in the circumferential, radial and axial directions.

In another embodiment according to any of the previous embodiments, the anti-icing system provides heated fluid to melt ice at the inner peripheral of the nacelle.

In another embodiment according to any of the previous embodiments, an enlarged area opening between adjacent ones of the resonators provides a flow path for heated fluid (i.e., receives the heated fluid) and the openings in the tubes are blocked from the heated fluid to provide the acoustic structure.

In another embodiment according to any of the previous embodiments, the heated fluid flowing through the enlarged space does not communicate with adjacent cells in a radial dimension but is blocked.

In another embodiment according to any of the previous embodiments, the anti-icing system includes an electric heater positioned between the three dimensional array of interconnected resonators and the perforated face sheet.

In another embodiment according to any of the previous embodiments, the electric heater has a control supplying electric power to a heated wire mesh such that there are openings within the electric heater.

In another embodiment according to any of the previous embodiments, the electric heater is provided by a pattern with openings between portions of the pattern to allow acoustic waves to access the three dimensional array.

In another embodiment according to any of the previous embodiments, the heated wire pattern is provided by carbon nanotube heaters.

In another embodiment according to any of the previous embodiments, the anti-icing system is provided by radio frequency waves, or the anti-icing system comprises a radio frequency emitter.

In another embodiment according to any of the previous embodiments, a radio frequency absorber is positioned between the three dimensional array and the perforated face sheet. There is a radio frequency radiator, and the three dimensional array is more transparent to radio frequency waves than is the radio frequency absorber.

In another embodiment according to any of the previous embodiments, the radio frequency absorber is provided by the three dimensional array.

In another embodiment according to any of the previous embodiments, the radio frequency absorber is capable to convert more than 50% of received radio frequency energy into heat across a range of 1-100 Gigahertz.

In another embodiment according to any of the previous embodiments, a control for the radio frequency radiator initially provides waves at a frequency tuned for absorption by the radio frequency absorber, and at a later point switches the frequency to one at which the radio frequency absorber is more transparent, to channel the radio frequency power radially inward of the acoustic treatment.

In another embodiment according to any of the previous embodiments, there are partitions between subportions of the three dimensional array.

In another embodiment according to any of the previous embodiments, there are plurality of partitions.

In another embodiment according to any of the previous embodiments, the partitions are solid and act to isolate the subportions.

In another embodiment according to any of the previous embodiments, the partitions are perforated such that there is acoustic communication between adjacent ones of the subportions.

In another embodiment according to any of the previous embodiments, there are spaced subportions of the three dimensional array which are interconnected by a tube that is open at least one end.

In another embodiment according to any of the previous embodiments, the cells have a curved bulb like structure.

The present disclosure may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2A shows a three dimensional array of interconnected resonators.
Figure 2B shows detail of a pair of interconnected resonators that may be part of the Figure 2A array.
Figure 2C shows further details of the interconnected resonators.
Figure 3A shows a first anti-icing system.
Figure 3B shows details of one embodiment of the anti-icing system of Figure 3A.
Figure 3C shows another view of the Figure 3B embodiment.
Figure 3D shows an alternative embodiment of an anti-icing system as shown in Figure 3B.
Figure 3E shows another view of the Figure 3D embodiment.
Figure 4A shows an alternative anti-icing system.
Figure 4B shows details of one embodiment of the Figure 4A anti-icing system.
Figure 4C shows an alternative embodiment of the Figure 4A anti-icing system.
Figure 5A shows yet another type anti-icing system.
Figure 5B shows a first embodiment of the Figure 5A anti-icing system.
Figure 5C shows an alternative embodiment of the Figure 5A anti-icing system.
Figure 6A shows one embodiment of an array of three dimensional interconnected resonators.
Figure 6B shows a feature that may be incorporated into the Figure 6A array.
Figure 6C shows yet another feature that may be incorporated into the Figure 6A array.
Figure 7A shows an alternative feature that could be incorporated into the Figure 6A array.
Figure 7B shows yet another feature that could be incorporated into the Figure 6A array.
Figure 8A shows another feature that may be incorporated into the Figure 6A array.
Figure 8B shows detail of the Figure 8A feature.

### DETAILED DESCRIPTION

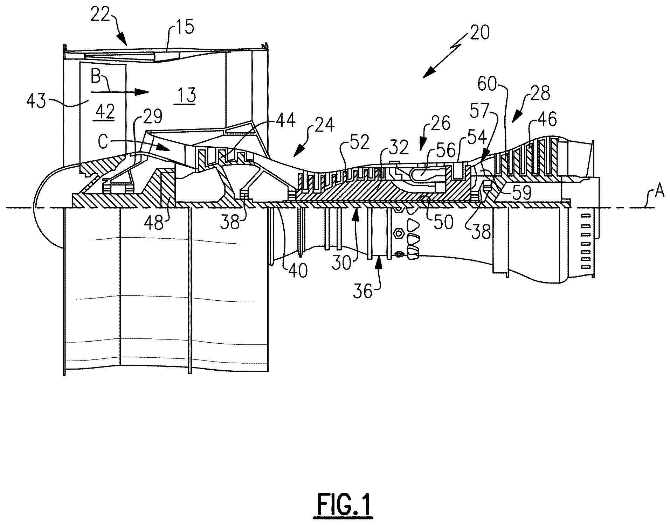

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches (1.0 m), or more narrowly no more than 75 inches (1.9 m). For example, the maximum radius of the fan blades 43 can be between 45 inches (1.1 m) and 60 inches (1.5 m), such as between 50 inches (1.3 m) and 55 inches (1.4 m). Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of Ibm of fuel being burned divided by Ibf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30°C). The TET may be greater than or equal to 2700.0 °F (1482°C), or more narrowly less than or equal to 3500.0 °F (1926.7°C), such as between 2750.0 °F (1510.0°C) and 3350.0 °F (1843.3°C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (537.8°C), or more narrowly greater than or equal to 800.0 °F (426.7°C), such as between 900.0 °F (482.2°C) and 975.0 °F (523.9°C). The relatively low EGT can be utilized in combination with the other techniques disclosed herein to reduce fuel consumption.

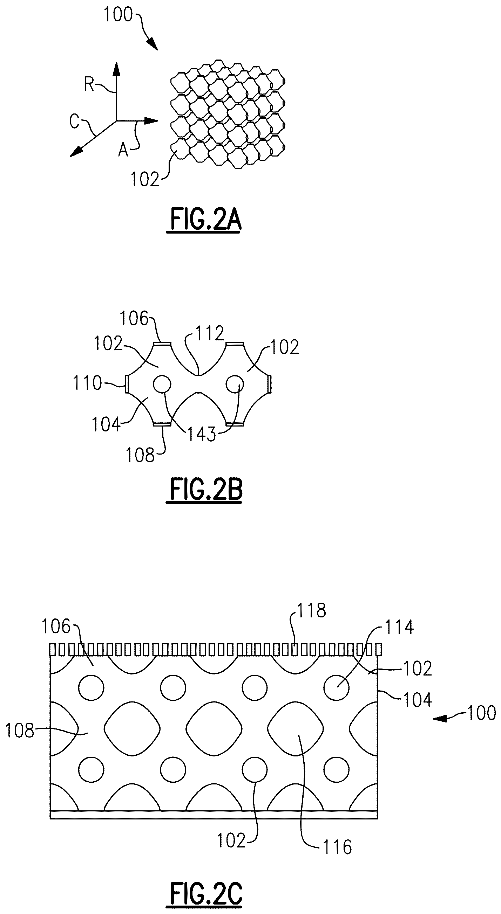

Figure 2A shows a three dimensional array 100 of interconnected resonators or cells 102. As can be seen, the array 100 extends in a circumferential direction C, a radial direction R, and an axial direction A. Each of the interconnected resonators 102 may look as shown in Figure 2B. The individual resonators 102 have a central body 104 and connector tubes 106 and 108. The resonators 102 are also connected by tubes 110 and 112 to the thicker body portion 104. It could be said that each of the resonators has a larger cross-sectional area central body 104, and smaller tube portions 106/108/110/112 at each of four ends of the central body 104. There are also tubes 143 connecting to other resonators spaced into and out of the plane of this figure.

The array 100 may be as disclosed in U.S. Patent Nos. 11,781,485 and 11,830,467.

As shown in Figure 2C, the array 100 is received behind a perforated face sheet 118 that will face into a bypass duct on a gas turbine engine. In this radial view there are holes 114 which would be between adjacent enlarged portions 104, and generally in tubes 110/112. In addition, there are enlarged spaces 116 between four adjacent resonators or cells 102. Although not shown in this Figure, there are also smaller holes 114 extending through the tubes 106, 108, and 143, and communicating fluid between adjacent cells 102.

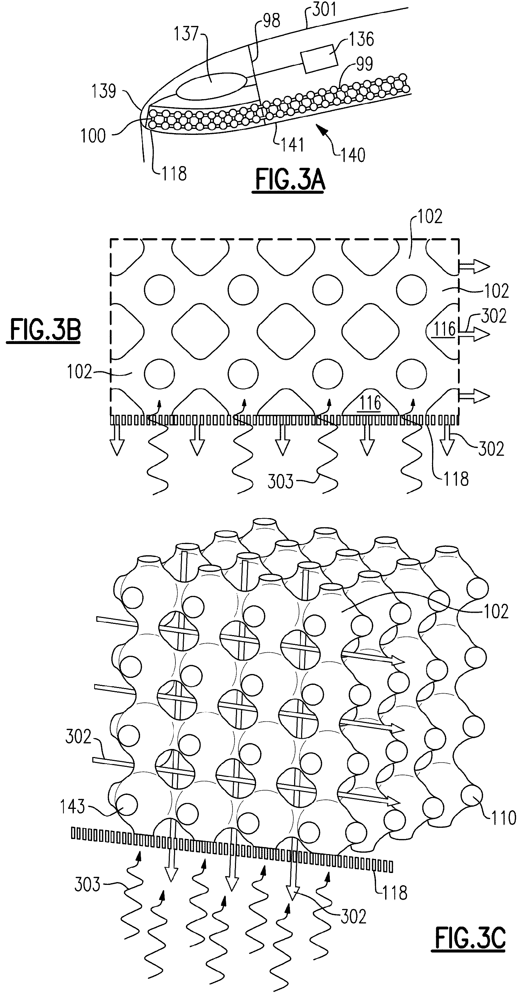

Figure 3A shows a first anti-icing embodiment 140. Here, the three dimensional array 100 of interconnected resonators and the associated perforated sheet 118 are shown on an inner periphery 141 at a tip 139 of a nacelle 301. The acoustic structure, and in particular, the three dimensional array 100 are shown at 99 to extend beyond a wall 98. At 137 a supply of fluid is shown from a source 136 to pass behind the array 100. The fluid may be heated air. This provides an anti-icing function at inner periphery 141.

As shown in Figure 3B, heated fluid 301 can pass between the enlarged portions 104 in adjacent cells 102 and in spaces 116 between them and reach the perforated sheet 118 to melt ice at the inner periphery 141. At the same time the central holes 114 (not shown) in tubes 108 are blocked from the fluid such that they can continue to provide the acoustic function.

In Figure 3B, it can be seen the heated fluid will be moving in three dimensions, outwardly of the cells. As shown at 302 fluid passes through the spaces 116 between adjacent tubes. At the same time, the openings in the tubes provide an acoustic function.

Figure 3C shows the fluid flow 302 and the openings in sheet 118 provide the acoustic function.

In particular, in configuration Figure 3B, the heating flow along 302 discharges into the fluid region below and provides a low velocity bias flow. This bias flow helps control the acoustic absorption taking place in the sheet 118. The fluid stream 302 therefore serves two purposes (provide heating/de-icing and acoustic absorption).

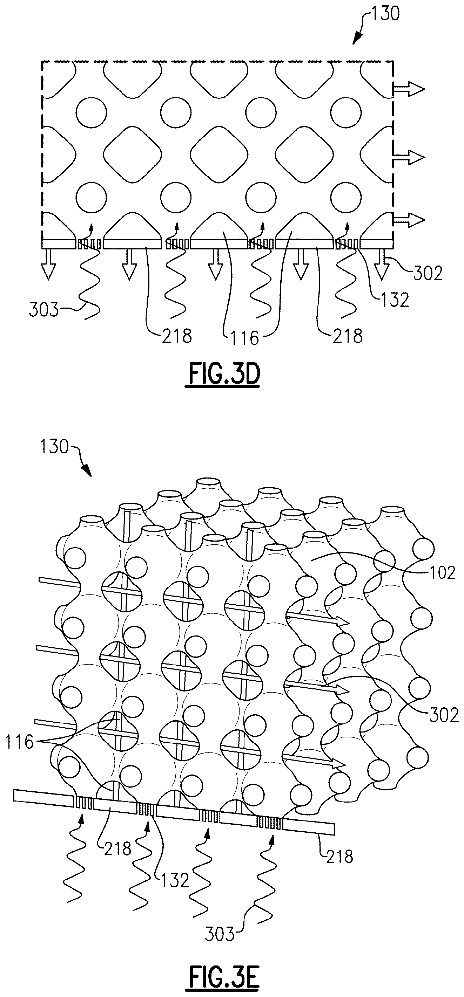

Figure 3D shows an embodiment 130 wherein the fluid connections between adjacent ones of the enlarged spaces 116 are blocked off at 218. Thus, the fluid does not flow in a radial direction in this embodiment. There are perforations at 132 that allows acoustic waves 303 to reach the array.

Figure 3E shows another view of the Figure 3D embodiment. Fluid flow 302 passes outwardly of the cells

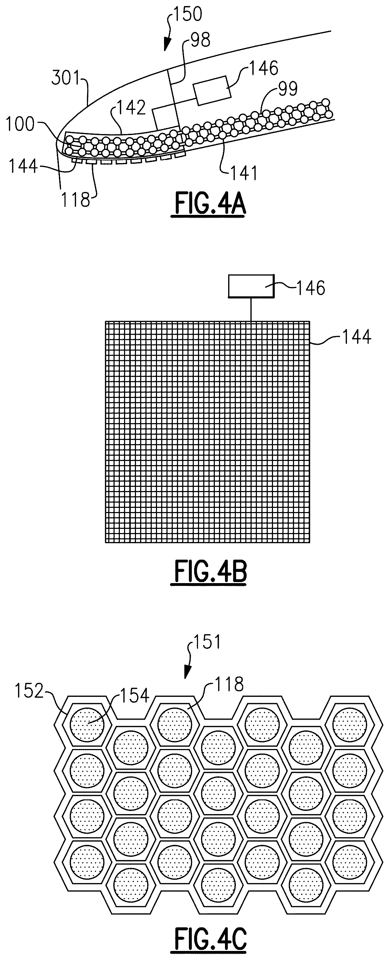

Figure 4A shows an embodiment 150 wherein a three dimensional array 100 is positioned adjacent the perforated sheet 118. Here again, the array 100 extends as shown at 99 beyond the wall 98.

A control 146 is illustrated and provides electric power to an electric heater 144.

As shown in Figure 4B, a heated wire mesh 144 may be utilized as the heater such that there are openings between adjacent mesh members to allow acoustic waves to pass through.

Figure 4C shows another embodiment 151 wherein there is a heat wiring pattern 152 which may be formed of carbon nanotube heaters, with intermediate cells 154 that are filled by the perforations in the perforated sheet 118. Note the perforations should only be aligned with the underlying structure. The pattern 152 can be any shape.

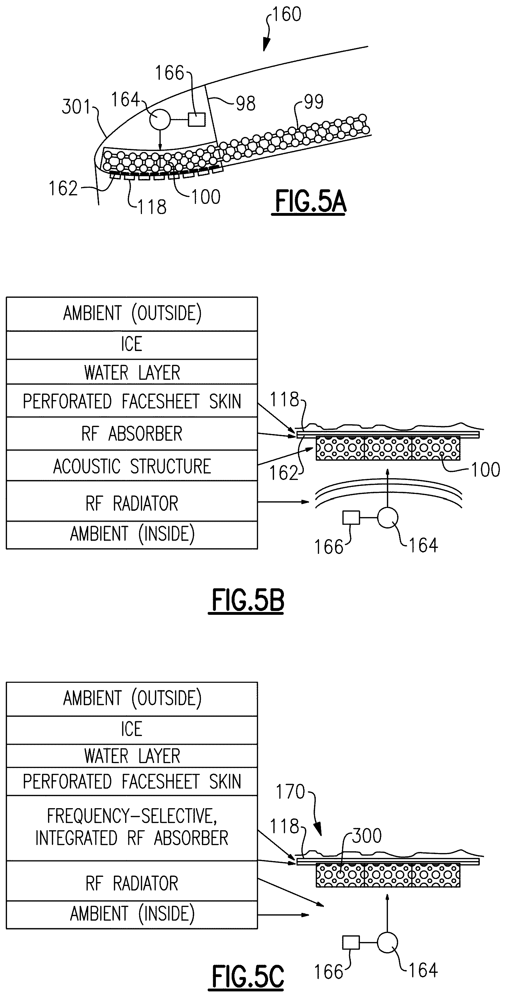

Figure 5A shows an embodiment wherein a radio frequency (RF) emitter 164 is shown schematically providing radio frequency waves to a radio frequency absorber 162 to heat the surface and provide the anti-icing function.

Figure 5B shows a first embodiment of the acoustic treatment. The perforated sheet 118 is shown along with an RF absorber 162. For purposes of this application, the term "RF absorber" preferably means that across a range of 1 to 100 Gigahertz the material will convert more than 50% of the energy to heat. As shown, the acoustic array 100 is positioned on an opposed side of the RF absorber 162 relative to the perforated face sheet 118. The RF radiator or emitter 164 is positioned inwardly of that. A control 166 is shown. The RF components could also be called microwave components. The three dimensional array 100 is more RF transparent than the RF absorber, to let RF waves pass through it and get absorbed by the RF absorber/susceptor.

Figure 5C shows an alternative embodiment 170 wherein there is the perforated face sheet 118, but the array 300, shaped as described above, is also the RF absorber.

In a method according to this disclosure, the array/emitter 300 might be initially heated at a frequency tuned for maximum absorption to heat adjacent ice and create a layer. Next, this frequency can be switched by control 166 to one at which the RF absorber 300 is transparent to directly channel the RF power into the liquid layer.

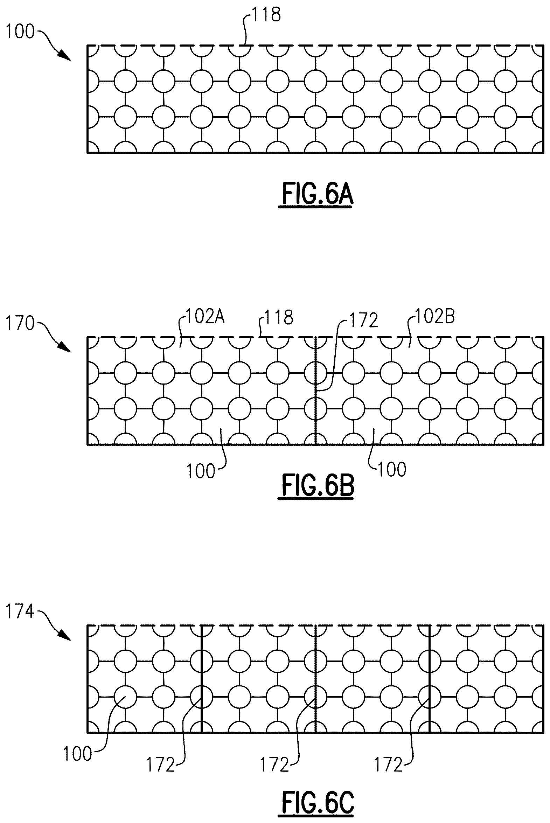

Figure 6A schematically shows a three dimensional array 100 and face sheet 118.

Figure 6B shows an embodiment 170 wherein a partition 172 partitions the array into axially separate reacting cells or zones 102A/102B.

Figure 6C shows an embodiment 174 having a plurality of such partitions 172.

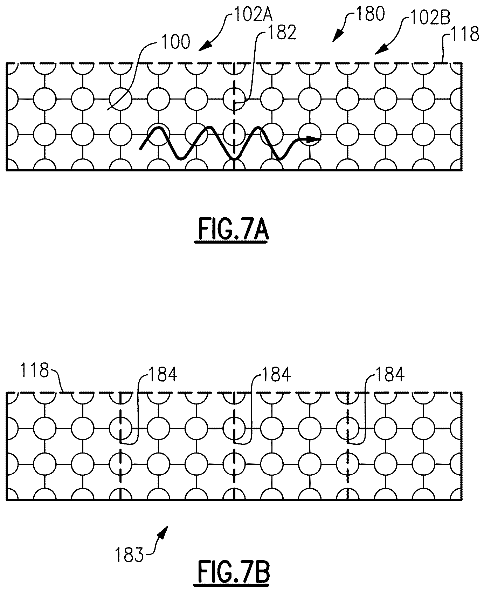

Figure 7A shows an embodiment 180 wherein the partition 182 has perforations to allow acoustic connections and communications between adjacent zones 102A/102B in the arrays 100.

Figure 7B shows an embodiment 183 having a plurality of such perforated partitions 184.

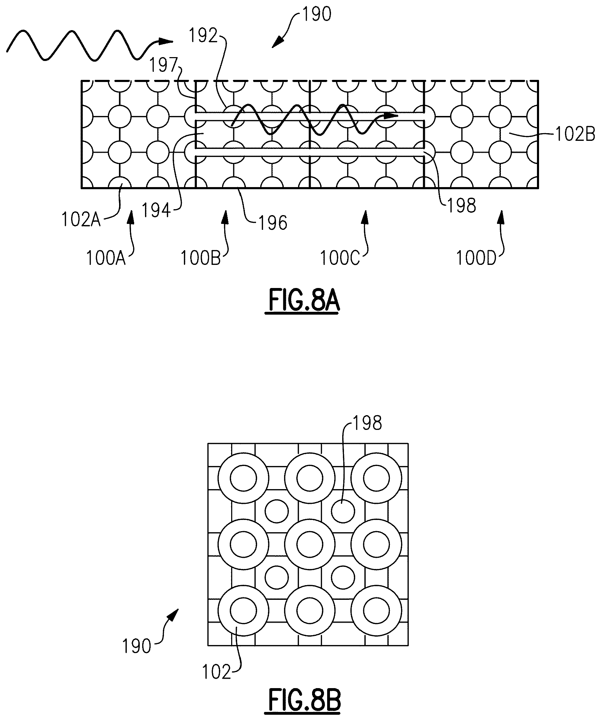

Figure 8A shows an embodiment 190 wherein there are partitions 197 between adjacent cells 100A-D, but connecting tubes 198 to connect the zones 102A/102B with central array subportions 192/194/196 which are not connected. Moreover, the tubes 198 could be closed at one end to provide more control over the acoustics.

Figure 8B schematically shows the embodiment 190 with closed connections on tube 198. As shown, the resonators 102 may be bulb like. In such an arrangement, additive manufacturing might be utilized to form the complex structures.

The shapes of the resonators or cells as shown in Figure 6A-6C, 7A, 7B, 8A and 8B may be as shown in Figure 2B.

Although embodiments of this disclosure have been shown, a worker of ordinary skill in this art would recognize that modifications would come within the scope of this disclosure. For that reason, the following claims should be studied to determine the true scope and content of this disclosure.

## Claims

1. A gas turbine engine (20) comprising:
a fan (42) delivering air into a bypass duct (13) defined between a nacelle (301) and an inner core housing (15), said inner core housing (15) receiving a compressor section (24), a turbine section (28) and a combustor (56), said nacelle (301) having an inner periphery (141) with a forwardmost point;
an acoustic structure on the inner periphery (141) of the nacelle (301) adjacent the forwardmost point, the acoustic structure being defined by a three dimensional array (100) of interconnected resonators (102), with the interconnected resonators (102) extending in a radial direction, a circumferential direction and an axial direction all defined about a rotational axis (A) of the engine (20), with the interconnected resonators (102) having a central body (104), and six tubes (106, 108, 110, 112, 143; 198) connecting the central body (104) of the resonators (102) to adjacent resonators (102) at respective central bodies (104), wherein the central body (104) has a larger cross-sectional area than the tubes (106...198);
a perforated face sheet (118) radially inward of the three dimensional array (100) of interconnected resonators (102); and
an anti-icing system.

2. The gas turbine engine (20) as set forth in claim 1, wherein there is an opening (114) through the central body (104) and at least some of the tubes (110, 112) adjacent central body (104), and there being openings (114) formed between adjacent ones of the resonators (102) and extending in the circumferential, radial and axial directions.

3. The gas turbine engine (20) as set forth in claim 2, wherein the anti-icing system is configured to provide heated fluid (301) to melt ice at the inner periphery (141) of the nacelle (301).

4. The gas turbine engine (20) as set forth in claim 3, wherein a space (116) between adjacent ones of the resonators (102) is configured to receive the heated fluid (301) and the openings (114) in the tubes (108) are blocked from the heated fluid (301) to provide the acoustic structure, and optionally wherein interconnected resonators (102) are configured such that the heated fluid (301) flowing through the space (116) does not communicate with adjacent resonators (102) in a radial dimension but is blocked.

5. The gas turbine engine (20) as set forth in claim 1 or 2, wherein the anti-icing system includes an electric heater (144) positioned between the three dimensional array (100) of interconnected resonators (102) and the perforated face sheet (118).

6. The gas turbine engine (20) as set forth in claim 5, wherein the electric heater (144) comprises a heated wire mesh (144) and a control (146) supplying electric power to the heated wire mesh (144) such that there are openings within the electric heater (144), or
wherein the electric heater (144) is provided by a heated wire pattern (152) with openings between portions of the pattern (152) to allow acoustic waves to access the three dimensional array (100), and optionally wherein the heated wire pattern (152) is provided by carbon nanotube heaters.

7. The gas turbine engine (20) as set forth in claim 1 or 2, wherein the anti-icing system is provided by radio frequency waves.

8. The gas turbine engine (20) as set forth in claim 7, wherein a radio frequency absorber (162) is positioned between the three dimensional array (100) and the perforated face sheet (118), and there is a radio frequency radiator (164), and the three dimensional array (100) is more transparent to radio frequency waves than is the radio frequency absorber (162).

9. The gas turbine engine (20) as set forth in claim 8, wherein the radio frequency absorber (162) is provided by the three dimensional array (100), and/or wherein the radio frequency absorber (162) is capable to convert more than 50% of received radio frequency energy into heat across a range of 1-100 Gigahertz.

10. The gas turbine engine (20) as set forth in claim 8 or 9, wherein a control (166) for the radio frequency radiator (164) is configured to initially provide waves at a frequency tuned for absorption by the radio frequency absorber (162), and at a later point switche the frequency to one at which the radio frequency absorber (162) is more transparent, to channel the radio frequency power radially inward of the acoustic structure.

11. The gas turbine engine (20) as set forth in any preceding claim, wherein there is a partition (172; 197) between subportions (102A, 102B; 192, 194, 196) of the three dimensional array (100).

12. The gas turbine engine (20) as set forth in claim 11, wherein there are plurality of partitions (172; 182; 184; 197).

13. The gas turbine engine (20) as set forth in claim 12, wherein the partitions (172; 197) are solid and configured to isolate the subportions (102A...196), or wherein the partitions (182; 184) are perforated such that there is acoustic communication between adjacent ones of the subportions (102A, 102B).

14. The gas turbine engine (20) as set forth in claim 11, 12 or 13, wherein there are spaced subportions (192, 194, 196) of the three dimensional array (100) which are interconnected by a tube (198) that is open at least one end.

15. The gas turbine engine (20) as set forth in any preceding claim, wherein the resonators (102) have a curved bulb like structure.
